# EUROPEAN PATENT SPECIFICATION

(11) **EP 3 961 055 B1**
(45) Date of publication and mention of the grant of the patent: **03.01.2024**
(21) Application number: 21187608.1
(22) Date of filing: 26.07.2021
(51) Int. Cl.: F16B 37/14, B64D 45/02, F16B 33/00, F16B 5/02, B64D 37/32

(54) **SPARK CONTAINMENT CAP**
FUNKENSCHUTZKAPPE
CAPUCHON DE CONFINEMENT D'ALLUMAGE

(30) Priority: 28.08.2020 GB 202013568
(43) Date of publication of application: 02.03.2022
(73) Proprietor: Airbus Operations Limited, Bristol BS34 7PA (GB)
(72) Inventor: Dobbin, Richard, Bristol, BS34 7PA (GB)
(74) Representative: Lerwill, Jonathan Ashley Ronald

(56) References cited:
- EP-A1- 3 462 046
- EP-A1- 3 560 839
- EP-A2- 3 492 389
- WO-A1-2014/170672
- WO-A1-2015/015153
- GB-A- 2 520 774
- US-A1- 2018 339 788
- US-A1- 2019 301 515

## Description

### FIELD OF THE INVENTION

The present invention relates to a spark containment cap. The present invention also relates to a fastening system, an aircraft comprising at least one of the spark containment cap and the fastening system, a method of securing a fastener and a spark containment cap to a structure.

### BACKGROUND OF THE INVENTION

Large passenger aircraft are typically struck by lightning once or twice a year, each lightning bolt striking with up to 200,000 amps of electrical current that seeks the path of least electrical resistance. Many modern passenger aircraft have exterior surfaces made from composite materials which have a very high electrical resistance. There is therefore a high probability of lightning attachment at any of the many metallic fasteners in the exterior surface, which have a much lower electrical resistance. In the wing, some of these fasteners pass through the outer wing skin into the fuel tank.

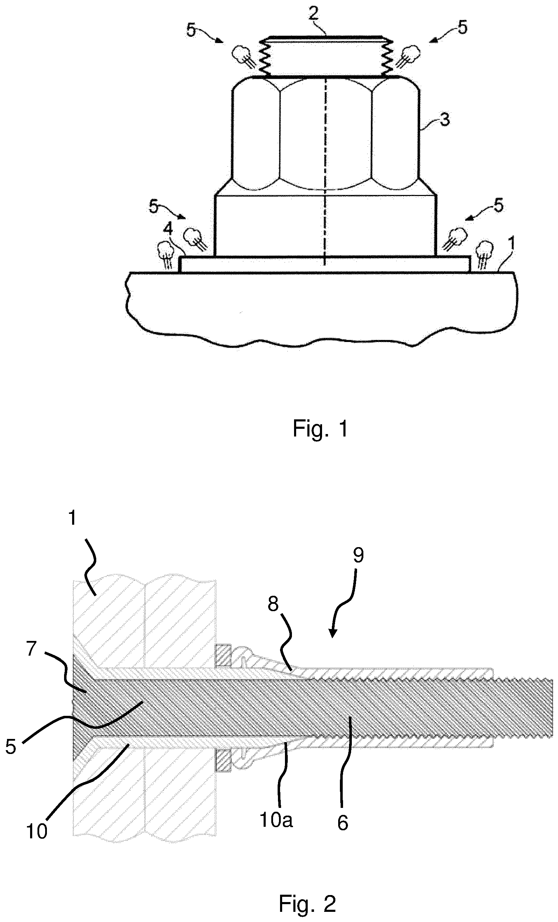

Figure 1 is a side view of part of a fastener assembly passing through a panel 1, which may be a composite or metallic panel. The assembly comprises a fastener comprising an externally threaded bolt 2, an internally threaded nut 3, and a washer 4. In the event of a lightning strike hitting the panel 1 and attaching to the fastener, sparking, plasma or out-gassing may occur at the locations indicated by reference 5 in Figure 1.

Figure 2 is a side view of another type of fastener 9 passing through the panel 1, which may be a composite or metallic panel. The type of fastener shown in Figure 1 is commonly known as a blind fastener, as it allows the fastener 9 to be fixed in place from only one side of the panel. The blind fastener 9 comprises a bolt 5 comprising an axially extending shaft 6, a head of the shaft 7, and a tubular sleeve 8 fitted around the shaft 6. The shaft 6 has a threaded portion on its outer circumference at one end which is the opposite end to the head of the shaft 7. The tubular sleeve 8 has a corresponding thread on its internal circumference such that the tubular sleeve 8 will travel along the shaft 7 as it is rotated. The blind fastener 9 also has a collar 10 provided around a head end of the bolt 5. The collar 10 abuts the head 7, and has a flange 10a at the other end.

During installation, the fastener 9 is slid through an aperture in the panel 1 until the flange 10a has at least passed through the other side of the panel 1. The shaft 6 is then rotated to cause the tubular sleeve 8 to be drawn towards the collar 10. When the tubular sleeve 8 contacts the collar 10, the tubular sleeve 8 deforms along the flange 10a, and splays outwardly forming an expanded portion on the opposing side of the panel 1 to the head of the shaft 7, therefore acting as a fastener, as shown in Figure 2.

In the event of a lightning strike hitting the panel 1 and attaching to the fastener, sparking or plasma may occur in the same way as described in relation to the fastener assembly of Figure 1.

With the above arrangements, the panel 1 may provide a fuel tank boundary and the fastener may therefore be immersed in fuel or fuel vapour rich gas. A lightning strike at the fastener may therefore provide sparking and hot gas ignition sources which could cause ignition of the fuel.

A known method of providing spark suppression is described in EP-A-0334011. A volume of gas is enclosed by a cap around the fastener. The gas provides spark suppression for arcing that may occur between the composite structure and the metal fastener during any lightning strike.

Various types of spark containment caps are known. Examples of a number of different embodiments of spark containment caps can be found, for example, in EP3492389A2, WO2015/015153A1, GB2520774A, EP3560839A1, EP3462046A1, US2018/339788A1, US2019/301515A1 and WO2014/170672A1. EP3492389 discloses a spark containment cap. The cap forms a sealed cavity around an end of a fastener protruding from a structure. The cap has a cap body with an annular base terminating at a rim which surrounds an opening into an air cavity arranged to enclose the end of the fastener. An annular sealing volume extends around the rim arranged to receive an annular bead of a curable sealing material around the opening into the cavity to provide a seal between the cap body and the structure to seal a volume of gas within the cavity. An engaging feature is configured to engage with the end of the fastener to prevent rotation of the fastener relative to the cap when the end of the fastener is received by the cap.

### SUMMARY OF THE INVENTION

According to a first aspect of the invention, there is provided a fastening system comprising: a spark containment cap for forming a sealed cavity around an end of a fastener protruding from a structure; and a fastener comprising a threaded portion, the spark containment cap comprising: a cap body defining an air cavity arranged to enclose the end of the fastener, and including an annular base terminating at a base rim which surrounds an opening into the air cavity; and an annular skirt to provide an annular sealing volume extending around the base rim arranged to receive an annular bead of a curable sealing material around the opening into the cavity to provide a seal between the cap body and the structure to seal a volume of gas within the cavity. The cap further comprises a fastener engaging portion that engages with a threaded portion of the fastener so as to secure the cap to the fastener.

The cap body is configured to receive at least a part of the fastener so that the threaded portion of the fastener engages with the fastener engaging portion of the spark containment cap.

The fastener comprises a deformable part which also engages with the threaded portion of the fastener, the deformable part being a fastener sleeve, and as the threaded portion of the fastener is rotated, the fastener sleeve is drawn along the threaded portion and is able to deform against the structure to fix the fastener in place.

With such an arrangement it is possible to place the spark containment cap over the end of the fastener, and use the engagement between the fastener engaging portion of the cap and the threaded portion of the fastener to temporarily hold the spark containment cap in place before the sealing material is cured to create the seal between the cap body and the structure.

The cap may comprise a cap upper at one end of the cap body that is opposite the base rim, and the fastener engaging portion is provided in the cap upper. As such, the cap is held in place in the cap upper which is distal from the base rim where the curing of the sealing material takes place which may simplify the curing process.

The fastener engaging portion may comprise an internal threaded portion extending around the inside of the cap that corresponds to the threaded portion on the fastener. This allows for a simple engagement between the two, where the cap is simply screwed onto the end of the fastener.

The fastener engaging portion may comprise one or more ribs extending at least partially around the inner circumference of the cap. This may provide a cheaper solution to providing a full internal thread in the cap.

The cap may further comprise an attachment feature for engaging with a deformable part of the fastener. As a result, the attachment feature may provide a stronger hold between the cap and the fastener prior to the sealing material being cured to create the seal between the cap body and the structure.

The deformable part of the fastener is a fastener sleeve. As a result, the attachment feature is able to engage with an existing part of the fastener, and the number of components, and complexity, of the fastener can be minimised.

Air channels may be defined in the fastener engaging portion. With such an arrangement, air in the cap is able to escape through the air channels to avoid a localised positive air pressure building up, reducing the efficacy of the engagement between the cap and the fastener.

The cap may comprise an annular skirt extending from the cap body to provide an annular sealing volume between the skirt and the annular base for containing the annular bead of the sealing material.

The cap body may comprise an inner cap member and the annular skirt may comprise a base of an outer cap member which fits over the inner cap member, and wherein the inner cap member comprises the engaging feature.

The fastener may be a blind fastener.

The fastening system may comprise an annular bead of uncured sealing material, the bead of sealing material being curable to provide a seal between the cap body and the structure to seal a volume of gas within the cavity.

According to a second aspect of the invention, there is provided a method of securing a fastener and a spark containment cap to a structure, the cap including a cap body having a cavity, and the method comprising: inserting the fastener through an aperture in the structure; drawing a fastener sleeve of the fastener towards the structure such that at least part of the sleeve is caused to deform outwardly against the structure; placing a spark containment cap over the fastener and engaging a fastener engaging portion of the cap with a threaded portion of the fastener to hold the spark containment cap against the structure; providing an annular bead of uncured sealing material between the structure and the cap; and curing the bead of sealing material.

According to a third aspect of the invention, there is provided an aircraft comprising a fastening system as set out in the statements above.

### BRIEF DESCRIPTION OF THE DRAWINGS

Embodiments of the invention will now be described with reference to the accompanying drawings, in which:
Figure 1 is a side view of a prior art fastener joint;
Figure 2 is a cross-sectional side view of an example blind fastener joint;
Figure 3 is a perspective view of an aircraft;
Figure 4a is a cross-sectional side view of a fastening system comprising a blind fastener joint together with a spark containment cap prior to installation;
Figure 4b is a cross-sectional side view of the a fastening system of Figure 4a, part-way through the installation process;
Figure 4c is a cross-sectional side view of the fastening system of Figures 4a and 4b, part-way through the installation process during a sealant application;
Figure 5 is a cross-sectional side view of an alternative embodiment of a fastening system part-way through the installation process;
Figure 6 is a cross-sectional side view of the alternative embodiment of Figure 5 part-way through the installation process during sealant injection;

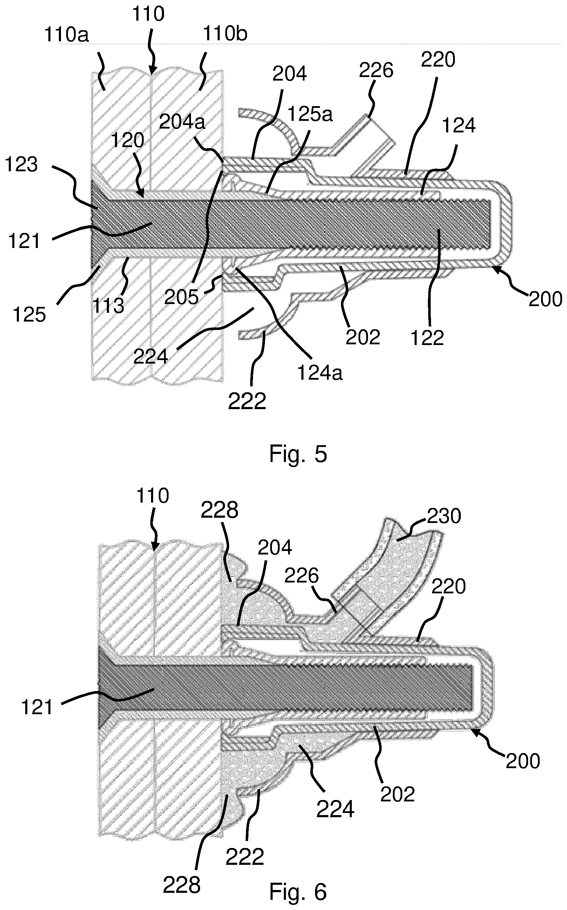

Figures 5 and 6 show an embodiment which do not belong to the claimed invention, and are present for illustration purposes only;

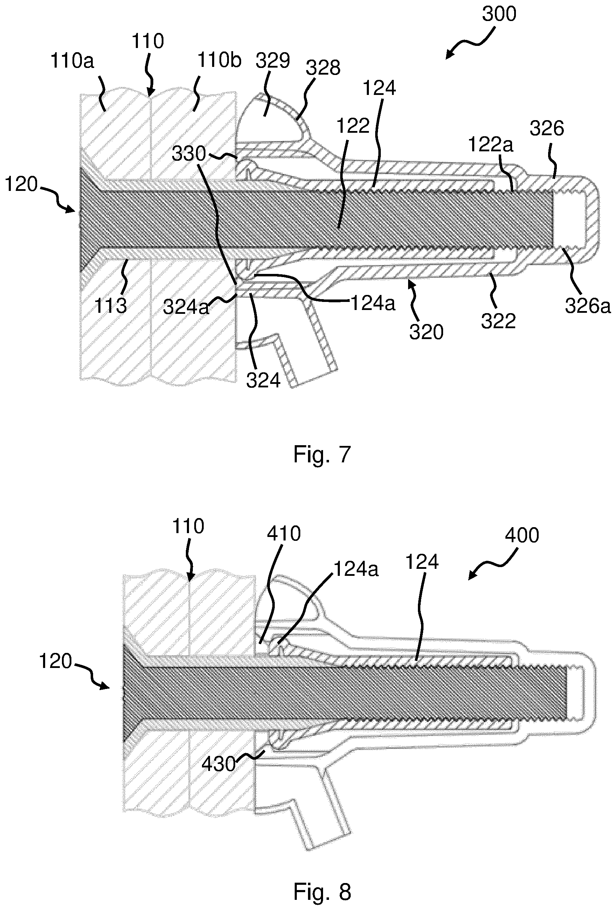

Figure 7 is a cross-sectional side view of an alternative embodiment of a fastening system part-way through the installation process; and
Figure 8 is a cross-sectional side view of an alternative embodiment of a fastening system part-way through the installation process.

### DETAILED DESCRIPTION OF EMBODIMENT(S)

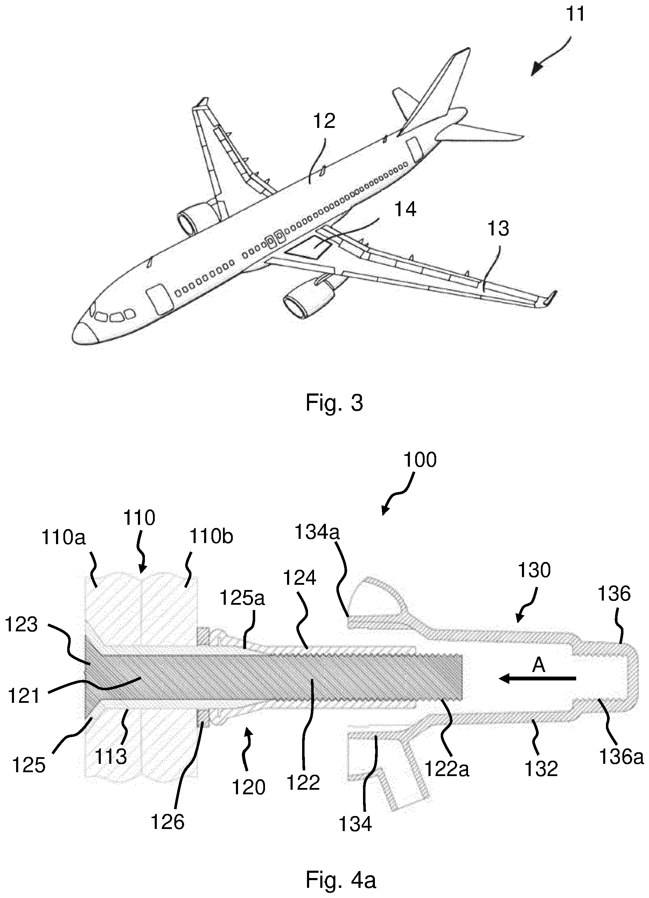

An aircraft 11 is shown in Figure 3. The aircraft 11 includes a fuselage 12. Two wings 13 extend from the fuselage 12. It will be appreciated that the fuselage 12 and wings 13 may take a variety of different planned formed shapes and profiles depending on the particular application. Fuel tanks 14 are formed in the fuselage 12 and wings 13. One such fuel tank 14 is schematically shown in Figure 3. The fuel tanks 14 are formed by a structure or structures forming part of the aircraft 11.

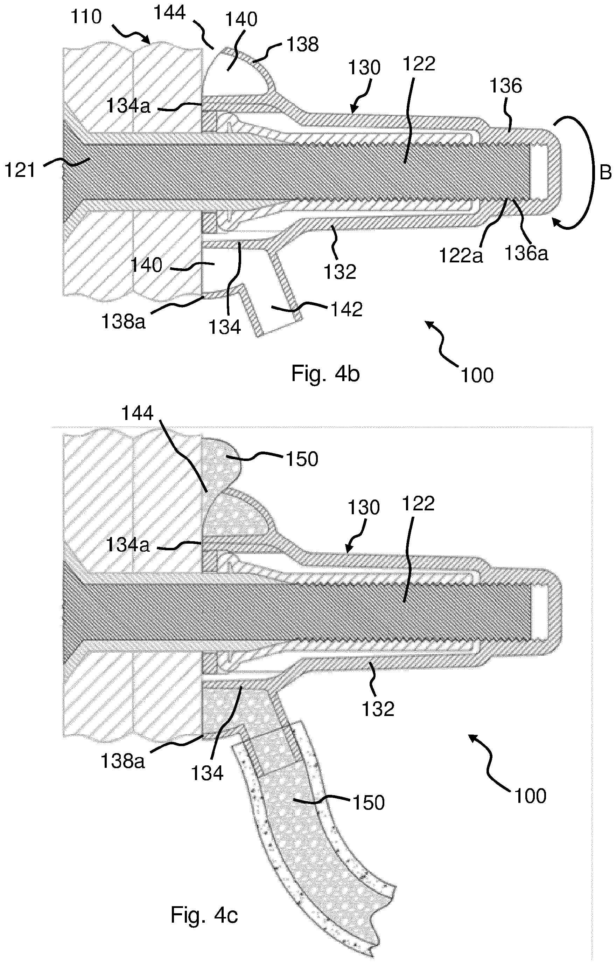

Figures 4a, 4b and 4c show a fastening system 100 in stages of installation. In Figure 4a, there is a structure 110 such as an aircraft skin panel 110a joined to another component, such as another panel 110b. A fastener 120 extends through the structure 110. The structure 110 in this embodiment is a composite aircraft structural component, but may be a hybrid composite-metallic component. The fastener 120 extends through an aperture 113 in the structure 110. The fastening system 100 also comprises a spark containment cap 130 which is shown being placed over the tail end of the fastener 120.

The fastener 120 is of the same type as that shown in Figure 2, and comprises a bolt 121 comprising an axially extending shaft 122, a head of the shaft 123, and a tubular sleeve 124 fitted around the shaft 122. The shaft 122 has a threaded portion on its outer circumference at its tail end, the tail end being the opposite end to that where the head of the shaft 123 is located. The tubular sleeve 124, which can also be referred to as a fastener sleeve, has a corresponding thread on its internal circumference such that the corresponding threads on the shaft 122 and the tubular sleeve 124 engage with each other, and the tubular sleeve 124 will travel along the shaft 122 as it is rotated. The blind fastener 120 also has a collar 125 provided around the head end of the bolt 121. The collar 125 allows the bolt 121 to more easily rotate within the aperture 113 of the structure. The collar 125 abuts the head 123, and has a flange 125a at the other end. The head 123, and corresponding portion of the collar 125, has a countersunk surface for being received in a countersink formed in the structure 110.

During installation of the fastener 120 into the structure 110, the fastener 120 is slid through the aperture 113 in the panel 110 until the flange 125a has at least passed through the other side of the panel 110. The shaft 121 is then rotated which causes the tubular sleeve 124 to be drawn towards the head end due to the corresponding threaded portions on the shaft 121 and sleeve 124. As it is drawn along, the tubular sleeve 124 contacts the collar 125 at the flange 125a and deforms, splaying outwardly to form an expanded portion on the opposing side of the panel 110 to the head of the shaft 123, as shown in Figures 4a, 4b, and 4c. A washer 126 is provided to protect the surface of the panel 110b.

With the fastener 120 fixed in place in the structure 110, the tail end of the fastener 120 protrudes from the structure 110. Due to the movement of the fastening sleeve 124 during the installation described above, there is an exposed portion 122a of the tail end of the shaft 122 which has a threaded outer circumference. The spark containment cap 130 can then be positioned over the protruding tail end of the fastener, as indicated by arrow A in Figure 4a.

The spark containment cap 130, which may be referred to herein simply as cap 130, has a cap body 132 which defines an air cavity which encloses the end of the fastener as shown in Figures 4b and 4c. Cap 130 also has an annular base 134 which terminates at a base rim 134a. The base rim 134a surrounds the opening into the air cavity in the cap body 132 and is arranged to engage and abut with a planar surface of the structure 110 around its full circumference when the cap 130 is fitted over the end of the fastener 120 as shown in Figures 4b and 4c.

The cap 130 further comprises a cap upper 136 which forms part of the cap body 132. The inside circumference of the cap upper has a fastener engaging portion which takes the form of a threaded surface 136a. The thread of the threaded surface 136a corresponds to the thread on the shaft 122 of the fastener 120, and the cap upper 136 is dimensioned such that it will engage with the exposed tail end of the shaft 122a. Figure 4b shows the cap 130 being rotated, see arrow B, to secure the cap 130 over the tail end of the fastener 120. In an alternative embodiment, the cap upper 136 may not be threaded internally but may be provided with an alternative fastener engaging portion, for example one or more ribs or ridges, the ribs or ridges still being able to engage successfully with the thread on the outer circumference of the exposed portion of the shaft 122a to hold the cap 130 in place over the tail end of the fastener 120.

One or more air channels (not shown) can be provided in the cap upper 136 through the fastener engaging portion to allow air to escape through the air channels to avoid a localised positive air pressure building up in the cap upper 136 as the end of the shaft 122a enters it, which could reduce the efficacy of the engagement between the cap and the fastener.

The engagement of the threaded portions is strong enough to keep the cap 130 in place over the tail end of the fastener 120 and abutted against the structure 110 at least until a stronger adhesive or sealant can be applied and cured.

The cap 130 further comprises an annular skirt which extends outwardly approximately from the upper end of the annular base 134 to a skirt rim 138a which lies substantially in the same plane as the rim 134a of the annular base 134. Like the base rim 134a, the skirt rim 138a also contacts the planar surface of the structure 110 around substantially the full circumference of the skirt rim 138a.

An annular pocket 140 is provided between the skirt 138 and the base 134. The annular pocket acts as an annular sealing volume. Due to the flared shape of the skirt 138, the pocket 140 has a radial width which increases as it extends from where the skirt 138 extends from the annular base 134 to the skirt rim 134a.

The skirt 138 has an injection channel 142. The injection channel 142 is arranged to interconnect with a sealing material injection device to provide a flow of sealing material through the skirt via the injection channel 142 into the pocket 140. Figure 4c shows sealing material 150 being injected into the annular pocket 140. A suitable sealing material is a polysulphide sealant such as Naftoseal (R) MC238B, MC238A, or MC780 available from Chemetall Group.

The skirt also has an outlet in the form of gap 144. The gap 144 is in fluid communication with the pocket 140 and is arranged to enable air to escape the pocket 140 through the skirt via the gap 144 as sealing material flows from the injection channel 142 into the pocket 140. When the pocket 140 is full, then the pressure in the pocket increases until it forces sealing material 150 to escape the pocket through the skirt via the gap 144. When this flow of sealing material 150 out of the gap 144 is visually observed, such as shown in Figure 4c, the flow of sealing material 150 from the sealing material injection device is stopped. In other embodiments, a more formal outlet may be formed into the skirt 138 instead of the gap 144.

Alternative sealant arrangements may be provided to those shown. For example, the pocket may be prefilled with sealing material, or one part such as the annular skirt may be movable relative to another part, for example the cap body.

Once sealing material 150 is provided in the pocket 140, the sealing material 150 is then allowed to cure, leaving a cured sealing material in the pocket 140 which secures the cap 130 to the structure 110 and forms a seal around the cavity formed by the cap body 132. The sealing material 150 forms an annular bead around the periphery of the cap 130, the bead of sealing material serving to seal the air cavity inside the cap body 132 in order to prevent escape of outgassing products, and to adhere the cap 130 to the structure 110. The seal prevents the ingress of water or other contaminants into the cavity, and also prevents plasma or other out-gassing products from exiting the cavity in the event of a lightning strike.

All parts of the cap 130 are integrally formed by injection moulding or similar. A suitable material is a glass filled polyetherimide (PEI) resin such as Ultem 2400 or Ultem 2310, available from SABIC Innovative Plastics Holding BV, or Nylon PA6, PA66 or PA12.

An alternative embodiment of a fastening system is shown in Figure 5. The structure 110 and fastener are similar to the embodiment already described above. There is a structure 110 such as an aircraft skin panel 110a joined to another component, such as another panel 110b. A fastener 120 extends through the structure 110. The structure 110 in this embodiment is a composite aircraft structural component, but may be a hybrid composite-metallic component. The fastener 120 extends through an aperture 113 in the structure 110. The alternative fastening system also comprises a spark containment cap 200 which is shown in place over the tail end of the fastener 120.

The fastener 120 comprises a bolt 121 comprising an axially extending shaft 122, a head of the shaft 123, and a fastener sleeve 124 fitted around the shaft 122. The shaft 122 has a threaded portion on its outer circumference at its tail end, the tail end being the opposite end to that where the head of the shaft 123 is located. The fastener sleeve 124, which can also be referred to as a tubular sleeve, has a corresponding thread on its internal circumference such that the corresponding threads on the shaft 122 and the fastener sleeve 124 engage with each other, and the fastener sleeve 124 will travel along the shaft 122 as it is rotated. The blind fastener 120 also has a collar 125 provided around the head end of the bolt 121. The collar 125 allows the bolt 121 to more easily rotate within the aperture 113 of the structure 110. The collar 125 abuts the head 123, and has a flange 125a at the other end. The head 123, and corresponding portion of the collar 125, has a countersunk surface for being received in a countersink formed in the structure 110.

During installation of the fastener 120 into the structure 110, the fastener 120 is slid through the aperture 113 in the panel 110 until the flange 125a has at least passed through the other side of the panel 110. The shaft 121 is then rotated which causes the fastener sleeve 124 to be drawn towards the head end due to the corresponding threaded portions on the shaft 121 and sleeve 124. As it is drawn along, the tubular sleeve 124 contacts the collar 125 at the flange 125a and deforms, splaying outwardly to form an expanded portion 124a on the opposing side of the panel 110 to the head of the shaft 123, as shown in Figures 5.

The spark containment cap 200, which may be referred to herein simply as cap 200, has a cap body 202 which defines an air cavity which encloses the end of the fastener as shown in Figure 5. Cap 200 also has an annular base 204 which terminates at a base rim 204a. The base rim 204a surrounds the opening into the air cavity in the cap body 132 and is arranged to engage and abut with a planar surface of the structure 110 around its full circumference when the cap 200 is fitted over the end of the fastener 120 as shown in Figure 5.

An attachment feature in the form of hooks 205 are formed at the lower, inboard, end of the cap body 204 at the base rim 204a. In the present embodiment the cap 200 is formed with six hooks 250, however the number of hooks may differ. The hooks 250 are received as a snap-fit between the expanded portion 124a of the fastening sleeve 124 and the planar surface of the structure 110, and provides a retaining force to keep the cap 200 in place over the tail end of the fastener 120 and abutted against the structure 110 at least until a stronger adhesive or sealant can be applied and cured.

The cap 200 further comprises a second wall 220 which partially surrounds the cap body 204. At an end proximate to the base rim 204a of the cap body 204 the second wall 220 comprises an annular skirt 222 which flares outwardly. The annular skirt 222 comprises a skirt rim (not shown) which contacts the planar surface of the structure 110 around substantially the full circumference of the skirt rim.

An annular pocket 224 is provided between the second wall 220 and the cap body 204. The annular pocket acts as an annular sealing volume. Due to the flared shape of the annular skirt 222, the pocket 224 has a radial width which increases as it extends towards the open end of the cap 200.

The second wall 220 has an injection channel 226 to provide the cap 200 with a side injection port. The injection channel 226 is arranged to interconnect with a sealing material injection device to provide a flow of sealing material through the skirt via the injection channel 226 into the pocket 224. Figure 6 shows sealing material 230 being injected into the annular pocket 224. A suitable sealing material is a polysulphide sealant such as Naftoseal (R) MC238B, MC238A, or MC780 available from Chemetall Group.

The skirt 222 has an outlet in the form of a number of gaps 228. The gaps 228 are in fluid communication with the pocket 224 and are arranged to enable air to escape the pocket 224 through the skirt via the gap 228 as sealing material flows from the injection channel 226 into the pocket 224. When the pocket 224 is full, then the pressure in the pocket increases until it forces sealing material 230 to escape the pocket through the skirt via the gaps 228. When this flow of sealing material 230 out of the gaps 228 is visually observed, such as shown in Figure 6, the flow of sealing material 230 from the sealing material injection device is stopped. In other embodiments, a more formal outlet may be formed into the skirt 222 instead of the gaps 228.

An alternative to the gaps 228 may be that the skirt 222 is equally distanced from the planar surface of the structure around the full circumference of the skirt rim. In this instance, when the pocket 224 is full it overflows evenly.

Once sealing material 230 is provided in the pocket 224, the sealing material 230 is then allowed to cure, leaving a cured sealing material in the pocket 224 which secures the cap 200 to the structure 110 and forms a seal around the cavity formed by the cap body 202. The sealing material 230 forms an annular bead around the periphery of the cap 200, the bead of sealing material serving to seal the air cavity inside the cap body 202 in order to prevent escape of outgassing products, and to adhere the cap 200 to the structure 110. The seal prevents the ingress of water or other contaminants into the cavity, and also prevents plasma or other out-gassing products from exiting the cavity in the event of a lightning strike.

All parts of the cap 200 are integrally formed by injection moulding or similar. A suitable material is a glass filled polyetherimide (PEI) resin such as Ultem 2400 or Ultem 2310, available from SABIC Innovative Plastics Holding BV, or Nylon PA6, PA66 or PA12.

A further alternative embodiments of a fastening system 300 which combines features of both the previously described embodiments is shown in Figure 7. The structure 110 and fastener 120 are similar to the embodiment already described above. The fastener 120 and the way in which it is installed into the structure has already been described previously, and so shall not be repeated.

The spark containment cap 320, which may be referred to herein simply as cap 320, has a cap body 322 which defines an air cavity which encloses the end of the fastener 120. Cap 320 also has an annular base 324 which terminates at a base rim 324a. The base rim 324a surrounds the opening into the air cavity in the cap body 322 and is arranged to engage and abut with a planar surface of the structure 110 around its full circumference when the cap 320 is fitted over the end of the fastener 120 as shown in Figure 7.

The cap 320 further comprises a cap upper 326 which forms part of the cap body 322. The inside circumference of the cap upper has a fastener engaging portion which takes the form of a threaded surface 326a. The thread of the threaded surface 326a corresponds to the thread on the shaft 122 of the fastener 120, and the cap upper 326 is dimensioned such that it will engage with the exposed tail end of the shaft 122a. In an alternative embodiment, the cap upper 326 may not be threaded internally but may be provided with an alternative fastener engaging portion, for example one or more ribs or ridges, the ribs or ridges still being able to engage successfully with the thread on the outer circumference of the exposed portion of the shaft 122a to hold the cap 320 in place over the tail end of the fastener 120.

One or more air channels (not shown) can be provided in the cap upper 326 through the fastener engaging portion to allow air to escape through the air channels to avoid a localised positive air pressure building up in the cap upper 326 as the end of the shaft 122a enters it, which could reduce the efficacy of the engagement between the cap and the fastener.

In addition to the retaining force provided by the fastener engaging portion in the cap upper 326, the cap 320 further comprises an attachment feature in the form of hooks 330 formed at the lower, inboard, end of the cap body 322 at the base rim 324a. In the present embodiment the cap 320 is formed with six hooks 330, however the number of hooks may differ. The hooks 330 are received as a snap-fit between the expanded portion 124a of the fastening sleeve 124 and the planar surface of the structure 110, and provides an additional retaining force to keep the cap 320 in place over the tail end of the fastener 120 and abutted against the structure 110.

The engagement of the fastener engaging portion in the cap upper 326, together with the engagement of the hooks 330, provides a retaining force strong enough to keep the cap 320 in place over the tail end of the fastener 120 and abutted against the structure 110 at least until a stronger adhesive or sealant can be applied and cured.

The cap 320 further comprises an annular skirt 328 of the same type as that described in relation to Figures 4a, 4b, and 4c above. As such, the description of the annular skirt 328, and the way in which sealing material can be injected into the annular pocket 329 formed by it is the same as described above, and will not be repeated.

Figure 8 shows a further alternative embodiment of a fastening system 400. The fastening system 400 is substantially similar to the fastening system 300 of Figure 7, and so will not be described in detail. Instead only the differences between the two shall be described.

In the fastening system 400, the fastener 120 further comprises a spacer in the form of washer 410 between the structure 110 and the expanded portion 124a of the fastening sleeve 124.

The washer 410 provides a greater distance between the structure 110 and the expanded portion 124a such that larger hooks 430 can be formed at the lower, inboard, end of the cap body at the base rim. The washer 410 is provided with an angled face, which abuts with a correspondingly angled face on the hooks 430. As a result, the hooks are able to better engage behind the expanded portion 124a of the fastening sleeve 124, and a greater retaining force provided by the hooks may be achieved.

Where the word 'or' appears this is to be construed to mean 'and/or' such that items referred to are not necessarily mutually exclusive and may be used in any appropriate combination.

Although the invention has been described above with reference to one or more preferred embodiments, it will be appreciated that various changes or modifications may be made without departing from the scope of the invention as defined in the appended claims.

## Claims

1. A fastening system (100, 300, 400) comprising:
a spark containment cap (130, 320) for forming a sealed cavity around an end of a fastener protruding from a structure (110); and
a fastener (120) comprising a threaded portion;
the spark containment cap (130, 320) comprising:
a cap body (132, 322) defining an air cavity arranged to enclose the end of the fastener (102), and including an annular base terminating at a base rim (134a, 324a) which surrounds an opening into the air cavity; and
an annular skirt (138, 328) to provide an annular sealing volume extending around the base rim (134a, 324a) arranged to receive an annular bead of a curable sealing material (150) around the opening into the cavity to provide a seal between the cap body (132, 322) and the structure (110) to seal a volume of gas within the cavity;
wherein the cap (130, 320) comprises a fastener engaging portion that engages with a threaded portion of the fastener so as to secure the cap (103, 320) to the fastener (120), the cap body (132, 322) being configured to receive at least a part of the fastener (120) so that the threaded portion of the fastener engages with the fastener engaging portion of the spark containment cap;
and wherein the fastener (120) comprises a deformable part which also engages with the threaded portion of the fastener, the deformable part being a fastener sleeve (124), and as the threaded portion of the fastener is rotated, the fastener sleeve (124) is drawn along the threaded portion and is able to deform against the structure (110) to fix the fastener (120) in place.

2. The fastening system of claim 1, wherein the cap (130, 320) comprises a cap upper (136, 326) at one end of the cap body that is opposite the base rim (134a, 324a), and the fastener engaging portion is provided in the cap upper (136, 326).

3. The fastening system of claim 1 or 2, wherein the fastener engaging portion comprises an internal threaded portion (136a, 326a) extending around the inside of the cap that corresponds to the threaded portion on the fastener.

4. The fastening system of claim 1 or claim 2, wherein the fastener engaging portion comprises one or more ribs extending at least partially around the inner circumference of the cap (130, 320).

5. The fastening system of any one of the preceding claims, wherein the cap (103, 320) further comprises an attachment feature (330) for engaging with a deformable part of the fastener.

6. The fastening system of any one of the preceding claims, wherein air channels are defined in the fastener engaging portion.

7. The fastening system of any preceding claim, wherein the cap (130, 320) comprises an annular skirt (138, 320) extending from the cap body (132, 322) to provide an annular sealing volume between the skirt (138, 320) and the annular base for containing the annular bead of the sealing material (150).

8. The fastening system of claim 7, wherein the cap body comprises an inner cap member and the annular skirt comprises a base of an outer cap member which fits over the inner cap member, and wherein the inner cap member comprises the engaging feature.

9. The fastening system of any one of the preceding claims, wherein the fastener is a blind fastener.

10. The fastening system of any one of the proceeding claims, comprising an annular bead of uncured sealing material, the bead of sealing material being curable to provide a seal between the cap body and the structure to seal a volume of gas within the cavity.

11. A method of securing a fastener (120) and a spark containment cap (130, 320) to a structure (110), the cap (130, 320) including a cap body (132, 322) having a cavity, and the method comprising:
inserting the fastener (120) through an aperture (113) in the structure (110);
drawing a fastener sleeve (124) of the fastener (120) towards the structure (110) such that at least part of the sleeve (124) is caused to deform outwardly against the structure (110);
placing a spark containment cap (130, 320) over the fastener (120) and engaging a fastener engaging portion of the cap with a threaded portion of the fastener to hold the spark containment cap (130, 320) against the structure (110);
providing an annular bead of uncured sealing material (150) between the structure (110) and the cap (130, 320); and
curing the bead of sealing material.

12. An aircraft (11) comprising a fastening system (100, 300, 400) of any of claims 1 to 10.

## Patentansprüche

1. Befestigungssystem (100, 300, 400), umfassend:
eine Funkenschutzkappe (130, 320) zum Ausbilden eines abgedichteten Hohlraums um ein Ende eines aus einer Struktur (110) herausragenden Befestigungselements; und
ein Befestigungselement (120), das einen Gewindeabschnitt umfasst;
wobei die Funkenschutzkappe (130, 320) Folgendes umfasst:
einen Kappenkörper (132, 322), der einen Lufthohlraum definiert, der so angeordnet ist, dass er das Ende des Befestigungselements (102) umschließt, und der eine ringförmige Basis umfasst, die an einem Basisrand (134a, 324a) endet, der eine Öffnung in den Lufthohlraum umgibt; und
einen ringförmigen Mantel (138, 328), um ein ringförmiges Dichtungsvolumen bereitzustellen, das sich um den Basisrand (134a, 324a) erstreckt, das so angeordnet ist, dass es eine ringförmige Wulst eines aushärtbaren Dichtungsmaterials (150) um die Öffnung in den Hohlraum aufnimmt, um eine Dichtung zwischen dem Kappenkörper (132, 322) und der Struktur (110) bereitzustellen, um ein Gasvolumen in dem Hohlraum abzudichten;
wobei die Kappe (130, 320) einen Befestigungselementeingriffsabschnitt umfasst, der mit einem Gewindeabschnitt des Befestigungselements in Eingriff kommt, um die Kappe (103, 320) an dem Befestigungselement (120) zu sichern, wobei der Kappenkörper (132, 322) dazu ausgelegt ist, zumindest einen Teil des Befestigungselements (120) aufzunehmen, so dass der Gewindeabschnitt des Befestigungselements mit dem Befestigungselementeingriffsabschnitt der Funkenschutzkappe in Eingriff kommt;
und wobei das Befestigungselement (120) einen verformbaren Teil umfasst, der auch mit dem Gewindeabschnitt des Befestigungselements in Eingriff kommt, wobei der verformbare Teil eine Befestigungselementhülse (124) ist, und wobei, während der Gewindeabschnitt des Befestigungselements gedreht wird, die Befestigungselementhülse (124) entlang des Gewindeabschnitts gezogen wird und sich an der Struktur (110) verformen kann, um das Befestigungselement (120) zu fixieren.

2. Befestigungssystem nach Anspruch 1, wobei die Kappe (130, 320) ein Kappenoberteil (136, 326) an einem Ende des Kappenkörpers umfasst, das dem Basisrand (134a, 324a) gegenüberliegt, und wobei der Befestigungselementeingriffsabschnitt in dem Kappenoberteil (136, 326) bereitgestellt ist.

3. Befestigungssystem nach Anspruch 1 oder 2, wobei der Befestigungselementeingriffsabschnitt einen Innengewindeabschnitt (136a, 326a) umfasst, der sich um die Innenseite der Kappe erstreckt, der dem Gewindeabschnitt des Befestigungselements entspricht.

4. Befestigungssystem nach Anspruch 1 oder Anspruch 2, wobei der Befestigungselementeingriffsabschnitt eine oder mehrere Rippen umfasst, die sich zumindest teilweise um den Innenumfang der Kappe (130, 320) erstrecken.

5. Befestigungssystem nach einem der vorhergehenden Ansprüche, wobei die Kappe (103, 320) ferner ein Halterungsmerkmal (330) zum Eingreifen mit einem verformbaren Teil des Befestigungselements umfasst.

6. Befestigungssystem nach einem der vorhergehenden Ansprüche, wobei Luftkanäle in dem Befestigungselementeingriffsabschnitt definiert sind.

7. Befestigungssystem nach einem der vorhergehenden Ansprüche, wobei die Kappe (130, 320) einen ringförmigen Mantel (138, 320) umfasst, der sich von dem Kappenkörper (132, 322) erstreckt, um ein ringförmiges Dichtungsvolumen zwischen dem Mantel (138, 320) und der ringförmigen Basis zum Fassen der ringförmigen Wulst des Dichtungsmaterials (150) bereitzustellen.

8. Befestigungssystem nach Anspruch 7, wobei der Kappenkörper ein inneres Kappenelement umfasst und der ringförmige Mantel eine Basis eines äußeren Kappenelements umfasst, das über das innere Kappenelement passt, und wobei das innere Kappenelement das Eingriffsmerkmal umfasst.

9. Befestigungssystem nach einem der vorhergehenden Ansprüche, wobei das Befestigungselement ein Blindbefestigungselement ist.

10. Befestigungssystem nach einem der vorhergehenden Ansprüche, umfassend eine ringförmige Wulst aus ungehärtetem Dichtungsmaterial, wobei die Wulst aus Dichtungsmaterial aushärtbar ist, um eine Dichtung zwischen dem Kappenkörper und der Struktur bereitzustellen, um ein Gasvolumen in dem Hohlraum abzudichten.

11. Verfahren zum Sichern eines Befestigungselements (120) und einer Funkenschutzkappe (130, 320) an einer Struktur (110), wobei die Kappe (130, 320) einen Kappenkörper (132, 322) umfasst, der einen Hohlraum aufweist, und wobei das Verfahren Folgendes umfasst:
Einsetzen des Befestigungselements (120) durch einen Durchgang (113) in der Struktur (110);
Ziehen einer Befestigungselementhülse (124) des Befestigungselements (120) hin zu der Struktur (110) derart, dass zumindest ein Teil der Hülse (124) veranlasst wird, sich an der Struktur (110) nach außen zu verformen;
Platzieren einer Funkenschutzkappe (130, 320) über dem Befestigungselement (120) und Ineingriffbringen eines Befestigungselementeingriffsabschnitts der Kappe mit einem Gewindeabschnitt des Befestigungselements, um die Funkenschutzkappe (130, 320) an der Struktur (110) zu halten;
Bereitstellen einer ringförmigen Wulst aus ungehärtetem Dichtungsmaterial (150) zwischen der Struktur (110) und der Kappe (130, 320); und
Aushärten der Wulst aus Dichtungsmaterial.

12. Luftfahrzeug (11), umfassend ein Befestigungssystem (100, 300, 400) nach einem der Ansprüche 1 bis 10.

## Revendications

1. Système de fixation (100, 300, 400), comprenant :
un capuchon de confinement d'étincelle (130, 320) destiné à former une cavité étanche autour d'une extrémité d'une pièce de fixation faisant saillie à partir d'une structure (110) ; et
une pièce de fixation (120) comprenant une portion filetée ;
le capuchon de confinement d'étincelle (130, 320) comprenant :
un corps de capuchon (132, 322) définissant une cavité d'air agencée pour enfermer l'extrémité de la pièce de fixation (102), et incluant une base annulaire se terminant à un rebord de base (134a, 324a) qui entoure une ouverture donnant dans la cavité d'air ; et
une jupe annulaire (138, 328) pour fournir un volume d'étanchéité annulaire s'étendant autour du rebord de base (134a, 324a) agencé pour recevoir un bourrelet annulaire d'un matériau d'étanchéité durcissable (150) autour de l'ouverture donnant dans la cavité pour fournir un joint d'étanchéité entre le corps de capuchon (132, 322) et la structure (110) pour rendre étanche un volume de gaz à l'intérieur de la cavité ;
dans lequel le capuchon (130, 320) comprend une portion entrant en prise avec pièce de fixation qui entre en prise avec une portion filetée de la pièce de fixation afin d'assujettir le capuchon (103, 320) à la pièce de fixation (120), le corps de capuchon (132, 322) étant configuré pour recevoir au moins une partie de la pièce de fixation (120) pour que la portion filetée de la pièce de fixation entre en prise avec la portion entrant en prise avec pièce de fixation du capuchon de confinement d'étincelle ;
et dans lequel la pièce de fixation (120) comprend une partie déformable qui entre également en prise avec la portion filetée de la pièce de fixation, la partie déformable étant un manchon de pièce de fixation (124), et, lorsque la portion filetée de la pièce de fixation est mise en rotation, le manchon de pièce de fixation (124) est tiré le long de la portion filetée et est capable de se déformer contre la structure (110) pour immobiliser la pièce de fixation (120) en place.

2. Système de fixation selon la revendication 1, dans lequel le capuchon (130, 320) comprend une partie supérieure de capuchon (136, 326) à une extrémité du corps de capuchon qui est opposée au rebord de base (134a, 324a), et la portion entrant en prise avec pièce de fixation est prévue dans la partie supérieure de capuchon (136, 326).

3. Système de fixation selon la revendication 1 ou 2, dans lequel la portion entrant en prise avec pièce de fixation comprend une portion filetée interne (136a, 326a) s'étendant autour de l'intérieur du capuchon qui correspond à la portion filetée sur la pièce de fixation.

4. Système de fixation selon la revendication 1 ou la revendication 2, dans lequel la portion entrant en prise avec pièce de fixation comprend une ou plusieurs nervures s'étendant au moins partiellement autour de la circonférence intérieure du capuchon (130, 320)

5. Système de fixation selon l'une quelconque des revendications précédentes, dans lequel le capuchon (103, 320) comprend en outre un organe d'attache (330) destiné à entrer en prise avec une partie déformable de la pièce de fixation.

6. Système de fixation selon l'une quelconque des revendications précédentes, dans lequel des canaux d'air sont définis dans la portion entrant en prise avec pièce de fixation.

7. Système de fixation selon une quelconque revendication précédente, dans lequel le capuchon (130, 320) comprend une jupe annulaire (138, 320) s'étendant depuis le corps de capuchon (132, 322) pour fournir un volume d'étanchéité annulaire entre la jupe (138, 320) et la base annulaire pour contenir le bourrelet annulaire du matériau d'étanchéité (150).

8. Système de fixation selon la revendication 7, dans lequel le corps de capuchon comprend un élément de capuchon intérieur et la jupe annulaire comprend une base d'un élément de capuchon extérieur qui s'ajuste par-dessus l'élément de capuchon intérieur, et dans lequel l'élément de capuchon intérieur comprend l'organe entrant en prise.

9. Système de fixation selon l'une quelconque des revendications précédentes, dans lequel la pièce de fixation est une pièce de fixation borgne.

10. Système de fixation selon l'une quelconque des revendications précédentes, comprenant un bourrelet annulaire de matériau d'étanchéité non durci, le bourrelet de matériau d'étanchéité étant durcissable pour fournir un joint d'étanchéité entre le corps de capuchon et la structure pour rendre étanche un volume de gaz à l'intérieur de la cavité.

11. Procédé pour assujettir une pièce de fixation (120) et un capuchon de confinement d'étincelle (130, 320) à une structure (110), le capuchon (130, 320) incluant un corps de capuchon (132, 322) ayant une cavité, et le procédé comprenant :
l'insertion de la pièce de fixation (120) à travers un trou (113) dans la structure (110) ;
le tirage d'un manchon de pièce de fixation (124) de la pièce de fixation (120) vers la structure (110) de telle sorte qu'au moins une partie du manchon (124) soit forcée de se déformer vers l'extérieur contre la structure (110) ;
le placement d'un capuchon de confinement d'étincelle (130, 320) par-dessus la pièce de fixation (120) et la mise en prise d'une portion entrant en prise avec pièce de fixation du capuchon avec une portion filetée de la pièce de fixation pour retenir le capuchon de confinement d'étincelle (130, 320) contre la structure (110) ;
la fourniture d'un bourrelet annulaire de matériau d'étanchéité non durci (150) entre la structure (110) et le capuchon (130, 320) ; et
le durcissement du bourrelet de matériau d'étanchéité.

12. Aéronef (11), comprenant un système de fixation (100, 300, 400) de l'une quelconque des revendications 1 à 10.
